# EUROPÄISCHE PATENTSCHRIFT

(11) **EP 2 531 551 B1**
(45) Veröffentlichungstag und Bekanntmachung des Hinweises auf die Patenterteilung: **05.11.2014**
(21) Anmeldenummer: 11700688.2
(22) Anmeldetag: 25.01.2011
(51) Int. Cl.: C08J 9/00

(54) **MELAMIN-/FORMALDEHYD-SCHAUMSTOFF MIT IN DIE STRUKTUR EINGEBAUTEN MIKROKAPSELN**
MELAMINE/FORMALDEHYDE FOAM HAVING MICROCAPSULES INCORPORATED INTO THE STRUCTURE
MELAMIN-/FORMALDEHYD-SCHAUMSTOFF MIT IN DIE STRUKTUR EINGEBAUTEN MIKROKAPSELN

(30) Priorität: 03.02.2010 EP 10152499
(43) Veröffentlichungstag der Anmeldung: 12.12.2012
(73) Patentinhaber: BASF SE, 67056 Ludwigshafen (DE)
(72) Erfinder: STEINKE, Tobias, Heinz, 67346 Speyer (DE); JUNG, Marc, Rudolf, 67551 Worms (DE); DAIß, Andreas, 67146 Deidesheim (DE); QUADBECK-SEEGER, Hans-Jürgen, 67098 Bad Dürkheim (DE); HAHN, Klaus, 67281 Kirchheim (DE); BAUMGARTL, Horst, 67063 Ludwigshafen (DE); SCHIERHOLZ, Jens-Uwe, 64625 Bensheim (DE); WESTER, Bettina, 67133 Maxdorf (DE); MÖCK, Christof, 68259 Mannheim (DE)
(86) Internationale Anmeldenummer: PCT/EP2011/050945
(87) Internationale Veröffentlichungsnummer: WO 2011/095409

(56) Entgegenhaltungen:
- WO-A2-2006/058675
- DE-A1-102004 049 341

## Beschreibung

Die vorliegende Erfindung betrifft offenzellige Melamin-/Formaldehyd- Schaumstoffe mit in die Struktur des Schaumstoffs eingebauten Mikrokapseln.

Aus der EP-A-17 672 und EP-37 470 sind bereits elastische Schaumstoffe auf Basis von Melamin/Formaldehyd-Kondensationsprodukten sowie ein Verfahren zu ihrer Herstellung bekannt.

Aus der WO-A-2008/37600 ist bekannt, dass man die an sich hydrophilen Melaminharzschaumstoffe durch Imprägnierung mit wasserabweisenden Chemikalien, wie zum Beispiel Fluorcarbonharze, in hydrophobe Melaminharzschaumstoffe überführen kann.

Aus der WO-A-2006/8054 sind modifizierte offenzellige Schaumstoffe mit einer Dichte im Bereich von 5 bis 1.000 kg/m³ und einem mittleren Porendurchmesser im Bereich von 1 µ*m* bis 1 mm, enthaltend im Bereich von 1 bis 2.500 Gew.-%, bezogen auf das Gewicht des unmodifizierten offenzelligen Schaumstoffs, mindestens ein bei Zimmertemperatur festes Carboxylgruppen-haltiges und/oder Carbonsäureestergruppenhaltiges Polymerisat mit einem Molekulargewicht Mₙ im Bereich von 1.000 bis 1.000.000 g/mol bekannt.

Diese nachträgliche Behandlung lässt jedoch zu wünschen übrig, da sie mit zusätzlichen Arbeitsschritten wie Imprägnierung, Pressen und Trocknung verbunden ist.

Der vorliegenden Erfindung lag daher die Aufgabe zugrunde, den zuvor genannten Nachteilen abzuhelfen.

Demgemäß wurden neue offenzellige Melamin-/Formaldehyd-Schaumstoffe mit in die Struktur der Schaumstoffe eingebaute Mikrokapseln gefunden, sowie Verfahren zu deren Herstellung und deren Verwendungen.

Bei den erfindungsgemäßen Melamin-/Formaldehyd-Schaumstoffen mit in die Struktur der Schaumstoffs eingebauten Mikrokapseln handelt es sich um ein offenzelliges Schaumstoffgerüst, welches eine Vielzahl miteinander verbundener, dreidimensional verzweigter Stege enthält und bei denen die Mikrokapseln in die Schaumstruktur, bevorzugt in den Knotenpunkten (Schaumbereiche an denen mehrere Stege zusammentreffen), eingebettet sind. Die Mikrokapseln sind somit fest mit dem Melaminharz verbunden aus dem der Schaumstoff besteht.

In Abhängigkeit von der Kapselgröße können die Mikrokapseln über die gesamte Schaumstruktur verteilt oder gezielt in die Knotenpunkte eingebracht werden. Wenn der Kapselradius kleiner als der Stegdurchmesser der Schaumstruktur ist, dann können die Kapseln sich in der gesamten Stegstruktur verteilen. Wenn der Kapselradius so gewählt wird, dass er größer als der Stegdurchmesser ist, dann werden die Kapseln bevorzugt in den Knotenpunkten der Schaumstruktur eingelagert.

Der Anteil der Mikrokapseln im Melaminharz-Schaumstoff beträgt 0,01 bis 50 Gew.-%, bevorzugt 1-15 Gew.-%.

Die erfindungsgemäßen offenzelligen Melamin-/Formaldehyd-Schaumstoffe mit in die Struktur der Kondensationsprodukte eingebauten Mikrokapseln können wie folgt hergestellt werden:
Die Mikrokapseln können dem Melamin, dem Formaldehyd, deren Mischungen oder einem Melamin-/Formaldehyd-Vorkondensat beim Schäumprozess, bevorzugt vor dem Schäumprozess einer oder mehrerer der Komponenten Melamin, Formaldehyd, deren Mischungen oder einem Melamin-/Formaldehyd-Vorkondensat zugefügt werden.

In der Regel kann man ein Melamin-/Formaldehyd-Vorkondensat, gegebenenfalls auch sprühgetrocknet, oder die einzelnen Komponenten oder eine Mischung aus Melamin und Formaldehyd und das Treibmittel und gegebenenfalls in einem Lösungsmittel und gegebenenfalls ein oder mehrere Dispergiermittel bzw. Emulgatoren und/oder Zusatzkomponenten mit den Mikrokapseln, gegebenenfalls sprühgetrocknet oder in Form von Dispersionen, bei Temperaturen von 0 bis 200°C, und einem Druck von 0,01 bis 50 bar, einbringen und vermischen. Die dabei entstehende Mischung kann bis zu einer homogenen Mischung bzw. Suspension bzw. Emulsion verrührt werden. Das Vermischen der Komponenten kann mit allen dem Fachmann bekannten Verfahren, zum Beispiel in einem statischen Mischer, vorgenommen werden.

Im nachfolgenden Schritt des erfindungsgemäßen Verfahrens erfolgt das Aufschäumen des Vorkondensates in der Regel durch Erhitzen der Lösung oder Dispersion des Melamin-/Formaldehyd-Vorkondensates, um einen Schaumstoff zu erhalten, der Mikrokapseln enthält. Dazu wird die Lösung oder Dispersion in der Regel auf eine Temperatur oberhalb des Siedepunktes des verwendeten Treibmittels erwärmt und in einer geschlossenen Form verschäumt.

Bevorzugt kann der Energieeintrag durch elektromagnetische Strahlung erfolgen, beispielsweise durch Hochfrequenzbestrahlung mit 5 bis 400 kW, bevorzugt 5 bis 200 kW, besonders bevorzugt 9 bis 120 kW pro Kilogramm der eingesetzten Mischung in einem Frequenzbereich von 0,2 bis 100 GHz, bevorzugt 0,5 bis 10 GHz. Als Strahlungsquelle für dielektrische Strahlung sind Magnetrone geeignet, wobei mit einem oder mehreren Magnetronen gleichzeitig bestrahlt werden kann.

Die hergestellten Schaumstoffe werden abschließend getrocknet, wobei im Schaumstoff verbliebenes Wasser und Treibmittel entfernt wird.

Bei den erfindungsgemäßen Verfahren bleiben die Mikrokapseln im Wesentlichen, also zu 70 bis 100%, bevorzugt zu 85 bis 100%, besonders bevorzugt zu 95 bis 100%, insbesondere zu 98 bis 100% mit ihrem Inhalt erhalten.

Als Melamin-/Formaldehyd-Vorkondensate eignen sich eigens hergestellte (siehe Übersichtsschriften: a) W. Woebcken, Kunststoffhandbuch 10. Duroplaste, München, Wien 1988, b) Encyclopedia of Polymer Science and Technology, 3. Aufl., Vol.1, Kap. Amino Resins, S. 340-370, 2003 c) Ullmann's Encyclopedia of Industrial Chemistry, 6. Aufl., Vol. 2, Kap. Amino Resins, S. 537-565. Weinheim 2003) oder handelsübliche Vorkondensate der beiden Komponenten, Melamin und Formaldehyd. Die MelaminFormaldehyd-Vorkondensate weisen in der Regel ein Molverhältnis von Formaldehyd zu Melamin 5 : 1 bis 1,3 : 1, bevorzugt 3,5 : 1 bis 1,5 : 1 auf.

Diese Melamin/Formaldehyd-Kondensationsprodukte können neben Melamin 0 bis 50 Gew.-%, vorzugsweise 0 bis 20 Gew.-%, anderer Duroplastbildner und neben Formaldehyd 0 bis 50 Gew.-%, vorzugsweise 0 bis 20 Gew.-% anderer Aldehyde ein kondensiert enthalten. Bevorzugt ist jedoch ein unmodifiziertes Melamin/Formaldehyd-Kondensationsprodukt.

Als Duroplastbildner können beispielsweise Alkyl- und Arylsubstituiertes Melamin, Harnstoff, Urethane, Carbonsäureamide, Dicyandiamid, Guanidin, Sulfurylamid, Sulfonsäureamide, aliphatische Amine, Glykole, Phenol und dessen Derivate eingesetzt werden.

Als Aldehyde können zum Beispiel Acetaldehyd, Trimethylolacetaldehyd, Acrolein, Benzaldehyd, Furfural, Glyoxal, Glutaraldehyd, Phthalaldehyd und Terephthalaldehyd eingesetzt werden. Weitere Einzelheiten über Melamin/Formaldehyd-Kondensationsprodukte finden sich in Houben-Weyl, Methoden der organischen Chemie, Band 14/2, 1963, Seiten 319 bis 402.

Es können bei der Herstellung des Melamin-/Formaldehyd-Vorkondensates Alkohole, beispielsweise Methanol, Ethanol oder Butanol zugesetzt werden, um teilweise oder vollständig veretherte Kondensate zu erhalten. Durch die Bildung der Ethergruppen können die Löslichkeit des Melamin-/Formaldehyd-Vorkondensates und die mechanischen Eigenschaften des vollständig ausgehärteten Materials beeinflusst werden.

Mikrokapseln mit Wandmaterial auf Basis eines hochvernetzten Methacrylsäureesterpolymers sind aus der EP-A-1 029 018, DE-A-101 39 171, WO-A-2005/116559 sowie der älteren europäischen Anmeldung EP-Anm.-Nr. 06117092.4 bekannt. Sie alle betreffen mikroverkapselte Latentwärmespeichermaterialien in unterschiedlichen Anwendungsbereichen. So lehrt die EP-A-1 029 018 die Verwendung in Bindebaustoffen wie Beton oder Gips, die DE-A-101 39 171 die Verwendung von mikroverkapselten Latentwärmespeichermaterialien in Gipskartonplatten und die WO-A-2005/116559 ihren Einsatz in Spanplatten. Alle in diesen Schriften beschriebenen Mikrokapseln haben gemein, dass sie eine hohe Dichtigkeit, sowohl bei thermischer wie auch chemischer Behandlung oder unter Druck aufweisen sollen.

DE-A-10 2007 055 813 beschreibt die Herstellung und Verwendung von thermisch zerstörbaren Mikrokapseln. Die Kapselwand ist aus Acrylaten aufgebaut. Der Kapselkern enthält lipophile Substanzen, wie aliphatische und aromatische Kohlenwasserstoffverbindungen, gesättigte oder ungesättigte C₆-C₃₀-Fettsäuren, Fettalkohole, C₅-C₃₀-Fettamine, Fettsäureester, natürliche und synthetische Wachse, halogenierte Kohlenwasserstoffe, Siliconöle, Klebstoffe, Aromastoffe, Duftstoffe, Wirkstoffe, Farbstoffe, Farbbildner, Pigmente und Vernetzer.

Die Kapselwand wird gemäß DE-A-10 2007 055 813 aus Polymeren aufgebaut. Die Kapseln haben eine Größe von 0,5 bis 100 µm, bevorzugt 1 bis 80 µm, besonders bevorzugt 5 bis 60 µm.

Als Mikrokapseln eignen sich solche Gebilde, die eine Größe von 0,5 bis 100 µm, bevorzugt 1 bis 80 µm, besonders bevorzugt 5 bis 60 µm und die einen Kapselkern und eine Kapselwand (siehe beispielsweise DE-A-10 2007 055 813) haben, wobei die Kapselwand in der Regel aufgebaut ist aus wenigstens zwei voneinander verschiedener Monomere, 30 bis 100 Gew.-% einem Monomer A aus der Gruppe umfassend C₁-C₂₄-Alkylester der Acryl- und/oder Methacrylsäure, Acrylsäure, Methacrylsäure und Maleinsäure, 0 bis 30 Gew.-% eines oder mehrerer bi- oder polyfunktioneller Monomere B, welche in Wasser nicht löslich oder schwer löslich sind und 0 bis 40 Gew.-% eines oder mehrerer sonstiger Monomere C, jeweils bezogen auf das Gesamtgewicht der Monomere.

Die erfindungsgemäßen Mikrokapseln umfassen in der Regel einen Kapselkern und eine Kapselwand aus Polymer. Der Kapselkern besteht in der Regel überwiegend, zu 70 bis 100 Gew.-%, bevorzugt 95 bis 100 Gew.-%, besonders bevorzugt 98 Gew.-% aus lipophiler Substanz. Der Kapselkern kann dabei abhängig von der Temperatur sowohl fest als auch flüssig sein.

Abhängig vom Herstellungsverfahren und dem dabei gewählten Schutzkolloid kann dieses ebenfalls Bestandteil der Mikrokapseln sein. So können 0 bis 10 Gew.-%, bevorzugt 1 bis 8 Gew.-%, besonders bevorzugt 1 bis 6 Gew.-% bezogen auf das Gesamtgewicht der Mikrokapseln Schutzkolloid sein. Gemäß dieser Ausführungsform weisen die Mikrokapseln in der Regel das Schutzkolloid auf der Oberfläche des Polymers auf.

Die mittlere Teilchengröße der Kapseln (Z-Mittel mittels Lichtstreuung, Malvern, Fraunhoferbeugung) beträgt 0,5 bis 100 µm, bevorzugt 1 bis 80 µm. Das Gewichtsverhältnis von Kapselkern zu Kapselwand, das Kern/Wand-Verhältnis, beträgt in der Regel 50:50 bis 95:5, bevorzugt 70:30 bis 95:5, besonders bevorzugt 75:25 bis 93:7.

Die Polymere der Kapselwand enthalten in der Regel 30 bis 100 Gew.-%, bevorzugt 40 bis 100 Gew.-%, besonders bevorzugt 50 bis 100 Gew.-%, insbesondere 60 bis 100 Gew.-%, ganz besonders bevorzugt 70 bis 100 Gew.-% mindestens eines Monomeren A aus der Gruppe umfassend C₁-C₂₄-Alkylester der Acryl- und/oder Methacrylsäure, Acrylsäure, Methacrylsäure und/oder Maleinsäure einpolymerisiert, bezogen auf das Gesamtgewicht der Monomere.

Außerdem können die Polymere der Kapselwand in der Regel 0 bis 30 Gew.-%, bevorzugt 0 bis 25 Gew.-%, besonders bevorzugt 1 bis 15 Gew.-% eines bi- oder polyfunktionellen Monomers B, welches in Wasser nicht löslich oder schwer löslich ist, einpolymerisiert enthalten.

Daneben können die Polymere der Kapselwand 0 bis 40 Gew.-% sonstige Monomere C einpolymerisiert enthalten.

Vorzugsweise ist die Kapselwand aus den Monomeren A und C, insbesondere im Wesentlichen, also zu 95 bis 100 Gew.-%, bevorzugt 98 bis 100 Gew.-%, besonders bevorzugt 99 bis 100 Gew.-%, insbesondere zu 100 Gew.-% Monomeren A aufgebaut.

Als Monomere A eignen sich die C₁-C₂₄-Alkylester der Acryl- und/oder Methacrylsäure. Weiterhin eignen sich die ungesättigten C₃- und C₄-Carbonsäuren wie Acrylsäure, Methacrylsäure sowie Maleinsäure. Beispielhaft seien Methyl-, Ethyl-, n-Propyl-, iso-Propyl-, n-Butyl-, iso-Butyl-, sec.-Butyl- und tert.-Butylacrylat sowie Methyl-, Ethyl-, n-Propyl-, iso-Propyl-, n-Butyl-, iso-Butyl-, sec.-Butyl- und tert.-Butylmethacrylat genannt. Geeignete Monomere la, deren Homopolymerisats eine Glasübergangstemperatur (Tg) von ≤ 60°C aufweist, sind beispielsweise die C₁-C₂₄-Alkylester der Acrylsäure und Butylmethacrylat. Beispielhaft seien Methylacrylat, Ethylacrylat, Propylacrylat, n-Butylacrylat, t-Butylacrylat, n-Pentylacrylat, 2-Methylbutylacrylat, 3-Methylbutylacrylat, Hexylacrylat, Ethylhexylacrylat und Propylheptylacrylat genannt. Bevorzugt wird n-Butylacrylat.

Geeignete Monomere B sind bi- oder polyfunktionelle Monomere, welche in Wasser nicht löslich oder schwer löslich sind, aber eine gute bis begrenzte Löslichkeit in der lipophilen Substanz haben. Unter Schwerlöslichkeit ist eine Löslichkeit kleiner 60 g/l, also 0 bis 60 g/l, bevorzugt 0 bis 50 g/l, besonders bevorzugt 0 bis 30 g/l bei 20°C zu verstehen. Unter bi- oder polyfunktionellen Monomeren versteht man Verbindungen, die wenigstens zwei nichtkonjugierte ethylenische Doppelbindungen haben. Vornehmlich kommen Divinyl- und Polyvinylmonomere in Betracht.

Geeignete Divinylmonomere sind Divinylbenzol, Trivinylbenzol und Divinylcyclohexan und Trivinylcyclohexan. Bevorzugte Divinylmonomere sind die Diester von Diolen mit Acrylsäure oder Methacrylsäure, ferner die Diallyl- und Divinylether dieser Diole. Beispielhaft seien Ethandioldiacrylat, Ethylenglykoldimethacrylat, 1,3-Butylenglykoldimethacrylat, Methallyl-methacrylamid, Allylacrylat und Allylmethacrylat genannt. Besonders bevorzugt sind Propandiol-, Butandiol-, Pentandiol- und Hexandioldiacrylat und die entsprechenden Methacrylate.

Bevorzugte Polyvinylmonomere sind die Polyester von Polyolen mit Acrylsäure und/oder Methacrylsäure, ferner die Polyallyl- und Polyvinylether dieser Polyole. Bevorzugt werden Trimethylolpropantriacrylat und -methacrylat, Pentaerythrittriallylether, Pentaerythrittetra-allylether, Pentaerythrittriacrylat und Pentaerythrittetraacrylat sowie ihre technischen Mischungen.

Als sonstige Monomere C kommen von den Monomeren A verschiedene monoethylenisch ungesättigte Monomere in Betracht, bevorzugt sind Monomere C wie Vinylacetat, Vinylpropionat und Vinylpyridin.

Besonders bevorzugt sind die wasserlöslichen Monomere C, z. B. Acrylnitril, Methacrylamid, Acrylsäure, Methacrylsäure, Itaconsäure, Maleinsäure, Maleinsäureanhydrid, N-Vinylpyrrolidon, 2-Hydroxyethylacrylat und -methacrylat und Acrylamido-2-methylpropansulfonsäure. Daneben sind insbesondere N-Methylolacrylamid, N-Methylolmethacrylamid, Dimethylamino-ethyl-methacrylat und Diethylaminoethylmethacrylat zu nennen.

Die Glasübergangstemperatur der Kapselwand kann (-60) bis 180°C, bevorzugt (-40) bis 150°C, bei der vorstehenden Glasübergangstemperatur handelt es sich um die nach Fox (siehe auch Handbook of Polymer Science and Technology, 1989 oder T.G. Fox, Bull. Am. Phys. Soc. (ser 11) 1, 123, 1956) aus dem Gewichtsanteil der Monomeren und der Glasübergangstemperatur der Homopolymerisate berechnete Glasübergangstemperatur, bei der Berechnung werden Monomere mit zwei oder mehr als zwei copolymerisierbaren, ethylenisch ungesättigten Gruppen nicht berücksichtigt, d. h. die Summe aller anderen Monomeren entspricht 100 Gew.-%.

Als Kernmaterial kommen für die Mikrokapseln flüssige oder feste in Wasser unlösliche bis im wesentlichen unlösliche Stoffe in Betracht, im Folgenden als lipophile Substanzen bezeichnet. Die lipophile Substanz kann sowohl ein Einzelstoff wie auch eine Mischung, in Form einer Lösung, Suspension oder Emulsion sein.

Lipophile Substanzen werden beispielsweise ausgewählt aus der Gruppe umfassend aliphatische und aromatische Kohlenwasserstoffverbindungen, gesättigte oder ungesättigte C₆-C₃₀-Fettsäuren, Fettalkohole, C₆-C₃₀-Fettamine, Fettsäureester, natürliche und synthetische Wachse, halogenierte Kohlenwasserstoffe, Siliconöle und -harze, reaktive und vernetzungsfähige Siliconöle, wie z.B. aminofunktionalisierte Silikonöle, schwer entflammbare hydrophobe Substanzen wie perflourierte Kohlenwasserstoffe und C₆-C₃₀-Alkohole, Fluorcarbonharze, Aromastoffe, Duftstoffe, Wirkstoffe, Tenside, Biozide, Farbstoffe, Farbbildner, Pigmente und Vernetzer.

Die lipophilen Substanzen können zusätzlich mit chemischen oder physikalischen Flammschutzmittel versehen sein. Unter WO 2008/037600 sind Imprägnierungen von Fluorcarbonharze mit brandhemmende Substanzen wie zum Beispiel Flammschutzmittel auf Basis von Silikaten, Boraten, Hydroxiden und Phosphaten der Metalle der I. bis III. Hauptgruppe, des Zinks und des Ammoniums beschrieben

Beispielhaft seien genannt:
aliphatische Kohlenwasserstoffverbindungen wie gesättigte oder ungesättigte C₁₀-C₄₀-Kohlenwasserstoffe, die verzweigt oder bevorzugt linear sind, z. B. wie n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan sowie cyclische Kohlenwasserstoffe, z. B. Cyclohexan, Cyclooctan, Cyclodecan; aromatische Kohlenwasserstoffverbindungen wie Benzol, Naphthalin, Biphenyl, o- oder m-Terphenyl, C₁-C₄₀-alkylsubstituierte aromatische Kohlenwasserstoffe wie Dodecylbenzol, Tetradecylbenzol, Hexadecylbenzol, Hexylnaphthalin oder Decylnaphthalin; gesättigte oder ungesättigte C₆-C₃₀-Fettsäuren wie Laurin-, Stearin-, oder Behensäure, bevorzugt eutektische Gemische aus Decansäure mit z. B. Myristin-, Palmitin- oder Laurinsäure; Fettalkohole wie Lauryl-, Stearyl-, Oleyl-, Myristyl-, Cetylalkohol, Gemische wie Kokosfettalkohol sowie die sogenannten Oxoalkohole, die man durch Hydroformylierung von α-Olefinen und weiteren Umsetzungen erhält; C₆-C₃₀-Fettamine, wie Decylamin, Dodecylamin, Tetradecylamin oder Hexadecylamin; Ester wie C₁-C₁₀-Alkylester von Fettsäuren wie Propylpalmitat, Methylstearat oder Methylpalmitat sowie bevorzugt ihre eutektischen Gemische oder Methylcinnamat; natürliche und synthetische Wachse wie Montansäurewachse, Montanesterwachse, Carnaubawachs, Polyethylenwachs, oxidierte Wachse, Polyvinyletherwachs, Ethylenvinylacetatwachs oder Hartwachse nach Fischer-Tropsch-Verfahren; halogenierte Kohlenwasserstoffe wie Chlorparaffin, Bromoctadecan, Brompentadecan, Bromnonadecan, Bromeicosan, Bromdocosan; natürliche Öle wie Erdnussöl, Sojaöl, Siliconöle beispielsweise mit Molekulargewichten (Mw) von 100 bis 150000, Dichten von 0,94 bis 0,97 und Viskositäten zwischen 10 und 1 000000 mPa·s; Klebstoffe, Aromastoffe, Duftstoffe und Wirkstoffe wie Pflanzenschutzmittel, gegebenenfalls als Lösung oder Suspension in den obengenannten lipophilen Substanzen der Gruppen a) bis i); Lösungen oder Suspensionen von Farbstoffen, Farbbildnern und anorganische und organische Pigmenten in den obengenannten lipophilen Substanzen der Gruppen a) bis i); Vernetzer, wie Carbodiimide oder andere reaktive, mehrfunktionelle Verbindungen wie Epoxide, Amine etc.

Die erfindungsgemäßen Mikrokapseln lassen sich durch eine sogenannte in-situ-Polymerisation herstellen. Das Prinzip der Mikrokapselbildung basiert darauf, dass man aus den Monomeren, einem Radikalstarter, einem Schutzkolloid und der einzukapselnden lipophilen Substanz eine stabile Öl-in-Wasser-Emulsion herstellt. Anschließend löst man die Polymerisation der Monomeren durch Erwärmung aus und steuert sie gegebenenfalls durch weitere Temperaturerhöhung, wobei die entstehenden Polymere die Kapselwand bilden, weiche die lipophile Substanz umschließt. Dieses allgemeine Prinzip wird beispielsweise in der DE-A-10 2007 055 813, WO-A-2008/071649 und DE-A- 101 39 171 beschrieben auf deren Inhalt ausdrücklich Bezug genommen wird.

Die Menge der eingesetzten Mikrokapsel-Komponenten kann je nach Material und Einsatzzweck variiert werden. Eine Menge an Mikrokapsel-Komponente(n) von 1 bis 30 Gew.-%, bevorzugt 5 bis 20 Gew.-%, bezogen auf das Gewicht des Melamin-/Form-aldehyd-Vorkondensats, hat sich bewährt.

Als Dispergiermittel bzw. Emulgator können anionische, kationische und nicht ionische Tenside sowie Mischungen davon eingesetzt werden.

Geeignete anionische Tenside sind beispielsweise Diphenylenoxidsulfonate, Alkan- und Alkylbenzolsulfonate, Alkylnaphthalinsulfonate, Olefinsulfonate, Alkylethersulfonate, Fettalkohol-sulfate, Ethersulfate, α-Sulfofettsäureester, Acylaminoalkansulfonate, Acylisothionate, Alkylethercarboxylate, N-Acylsarcosinate, Alkyl- und Alkyletherphosphate. Als nicht ionische Tenside können Alkylphenolpolyglykolether, Fettalkoholpolyglykolether, Fettsäurepolyglykol-ether, Fettsäurealkanolamide, Ethylenoxid/Propylenoxid-Blockcopolymere, Aminoxide, Glycerin-fettsäureester, Sorbitanester und Alkylpolyglykoside verwendet werden. Als kationische Emulgatoren können z.B. Alkyltriammoniumsalze, Alkylbenzyldimethylammoniumsalze und Alkylpyridiniumsalze eingesetzt werden.

Die Dispergiermittel bzw. Emulgatoren können in Mengen von 0,2 bis 5 Gew.-%, bezogen auf das Melamin-/Formaldehyd-Vorkondensat eingesetzt werden.

Die Dispergiermittel bzw. Emulgatoren und/oder Schutzkolloide können im Prinzip zu einem beliebigen Zeitpunkt zur Rohdispersion gegeben werden, sie können jedoch auch bereits in dem Lösungsmittel bei Einbringung der Mikrokapsel-Dispersion vorhanden sein.

Als Härter können saure (acide) Verbindungen eingesetzt werden, die die Weiterkondensation des Melaminharzes katalysieren. Die Menge dieser Härter beträgt in der Regel 0,01 bis 20 Gew.-%, bevorzugt 0,05 und 5 Gew.-%, jeweils bezogen auf das Vorkondensat. Geeignete saure Verbindungen sind anorganische und organische Säuren, zum Beispiel ausgewählt aus der Gruppe bestehend aus Salzsäure, Schwefelsäure, Phosphorsäure, Salpetersäure, Ameisensäure, Essigsäure, Oxalsäure, Toluolsulfonsäuren, Amidosulfonsäuren, Säureanhydride und Mischungen davon.

Abhängig von der Wahl des Melamin-/Formaldehyd-Vorkondensates enthält die Mischung ein Treibmittel. Dabei richtet sich die Menge des Treibmittels in der Mischung in der Regel nach der erwünschten Dichte des Schaumstoffs.

Prinzipiell können bei dem erfindungsgemäßen Verfahren sowohl physikalische als auch chemische Treibmittel verwendet werden.

Als Treibmittel eignen sich "physikalische" oder "chemische" Treibmittel (Encyclopedia of Polymer Science and Technology, Vol. I, 3. Aufl., Kapitel Additives, Seite 203 bis 218,2003).

Als "physikalische" Treibmittel eignen sich, beispielsweise Kohlenwasserstoffe, wie Pentan, Hexan, halogenierte, insbesondere chlorierte und/oder fluorierte Kohlenwasserstoffe, beispielsweise Methylenchlorid, Chloroform, Trichlorethan, Fluorchlorkohlenwasserstoffe, teilhalogenierte Fluorchlorkohlenwasserstoffe (H-FCKW), Alkohole, beispielsweise Methanol, Ethanol, n- oder iso-Propanol, Ether, Ketone und Ester, beispielsweise Ameisensäuremethylester, Ameisensäureethylester, Essigsäuremethylester oder Essigsäureethylester, in flüssiger Form oder Luft, Stickstoff und Kohlendioxid als Gase.

Als "chemische" Treibmittel eignen sich, beispielsweise Isocyanate im Gemisch mit Wasser, wobei als wirksames Treibmittel Kohlendioxid freigesetzt wird. Ferner sind Carbonate und Bicarbonate im Gemisch mit Säuren geeignet, welche ebenfalls Kohlendioxid erzeugen. Auch geeignet sind Azoverbindungen, wie z.B. Azodicarbonamid.

In einer bevorzugten Ausführungsform der Erfindung enthält die Mischung zusätzlich wenigstens ein Treibmittel. Dieses Treibmittel liegt in der Mischung in einer Menge von 0,5 bis 60 Gew.-%., bevorzugt 1 bis 40 Gew.-%, besonders bevorzugt 1,5 bis 30 Gew.-% bezogen auf das Melamin-/Formaldehyd-Vorkondensat, vor. Es wird bevorzugt ein physikalisches Treibmittel mit einem Siedepunkt zwischen 0 und 80°C zugesetzt.

In einer weiteren Ausführungsform enthält die Mischung neben dem Melamin-/Formaldehyd-Vorkondensat des herzustellenden Schaumstoffes und den Mikrokapseln, auch einen Emulgator sowie gegebenenfalls einen Härter und gegebenenfalls ein Treibmittel.

In einer weiteren Ausführungsform ist die Mischung frei von weiteren Zusatzstoffen. Für manche Zwecke kann es jedoch günstig sein, 0,1 bis 20 Gew.-%, bevorzugt 0,1 bis 10 Gew.%, bezogen auf das Melamin-/Formaldehyd-Vorkondensat, an üblichen Zusatzstoffen, wie Farbstoffe, Flammschutzmittel, UV-Stabilisatoren, Mittel zur Herabsetzung der Brandgastoxizität oder zur Förderung der Verkohlung zuzusetzen.

Es ist auch möglich, dem Melamin-/Formaldehyd-Vorkondensat Zusatzstoffe zuzusetzen. Die abrasiven Schaumstoffe enthalten in einer Ausführungsform mindestens einen Zusatzstoff aus der Gruppe der Farbstoffe, Duftstoffe, optischen Aufheller, UV-Absorbern und Pigmente. Dieser Zusatzstoff ist bevorzugt homogen in dem Schaumstoff verteilt.

Als Pigmente können die gängigen anorganischen natürlichen (z.B. Kreide) oder synthetischen Pigmente (z.B. Titanoxide), aber auch organische Pigmente eingesetzt werden.

Die Freisetzung des Kapselkerns in der offenzelligen Schaumstruktur kann durch thermische (z.B. Heißluft, verschiedene Strahlungsarten, z.B. Infrarot- oder Mikrowellenstrahlung) oder mechanische Zerstörung (Pressen, Walzen, Ultraschall etc.) der Kapselwand der Mikrokapseln erfolgen.

Dadurch kann der Inhalt der Kapseln gleichmäßig oder nahezu gleichmäßig freigesetzt werden und die Oberflächenstruktur (Stege und Knoten) auch im Innern der offenzelligen Melaminharzschaumstoffstruktur benetzt und z.B. hydrophob ausstattet werden.

Bei der mechanischen Behandlung können durch Pressen des erfindungsgemäßen Melaminharzschaumstoffs in der Regel die Membranreste und ggf. harte aber brüchige Stege zerstört und der Schaumstoff elastischer werden, wobei auch die mechanische Freisetzung erfolgen kann.

Der Pressvorgang kann wie folgt durchgeführt werden:
Das Pressen jeweils vorzugsweise wie in EP-A 0451535 beschrieben, indem der Schaumstoff durch einen definierten Spalt zwischen zwei gegensinnig rotierenden, parallel ausgerichteten Walzen hindurchgeführt wird.

Neben dem Durchführen des Schaumstoffes durch einen Spalt zwischen zwei gleichsinnig rotierenden Walzen ist es auch möglich, dass der Schaumstoff auf einem Förderband transportiert wird und eine Walze, die sich mit der gleichen Umfangsgeschwindigkeit dreht, mit der der Schaumstoff bewegt wird, auf den Schaumstoff presst. Weiterhin kann der Druck auf den Schaumstoff dadurch ausgeübt werden, dass der Schaumstoff zum Beispiel in eine Presse eingelegt wird, in welcher ein Stempel auf den Schaumstoff presst. In diesem Fall ist jedoch ein kontinuierliches Pressen nicht möglich.

Es bleibt anzumerken, dass nicht für alle Anwendungen eine Freisetzung des Kapselkerns erforderlich ist. So werden beispielsweise brandhemmende Substanzen erst im Brandfall aktiv und können ihre Wirkung auch in einer verkapselten Form entfalten.

Bei beiden Ausführungsformen erfolgt das Pressen jeweils vorzugsweise wie in EP-A 0 451 535 beschrieben, indem der Schaumstoff durch einen definierten Spalt zwischen zwei gegensinnig rotierenden, parallel ausgerichteten Walzen hindurchgeführt wird.

Neben dem Durchführen des Schaumstoffes durch einen Spalt zwischen zwei gleichsinnig rotierenden Walzen ist es auch möglich, den zum Imprägnieren notwendigen Druck dadurch auszuüben, dass der imprägnierte Schaumstoff auf einem Förderband transportiert wird und eine Walze, die sich mit der gleichen Umfangsgeschwindigkeit dreht, mit der der Schaumstoff bewegt wird, auf den Schaumstoff presst. Weiterhin kann der Druck auf den Schaumstoff dadurch ausgeübt werden, dass der Schaumstoff zum Beispiel in eine Presse eingelegt wird, in welcher ein Stempel auf den Schaumstoff presst. In diesem Fall ist jedoch ein kontinuierliches Pressen nicht möglich.

Die erfindungsgemäß hergestellten offenzelligen Melaminharzschaumstoffe weisen in der Regel eine Dichte von 3 bis 100 g/l, besonders bevorzugt 5 bis 50 g/l auf.

Die erfindungsgemäßen offenzelligen Melaminharzschäume enthaltend Mikrokapseln sowie die Melaminharzschäume nach der Zerstörung der Mikrokapseln können bei diskontinuierlich, bevorzugt bei kontinuierlicher Arbeitsweise als Platten oder Bahnen in der Regel mit jeder beliebigen Dicke hergestellt werden, zweckmäßigerweise in Schichtdicken von 0,1 bis 500 cm, bevorzugt 0,5 bis 200 cm, besonders bevorzugt 1 bis 100 cm, insbesondere 3 bis 80 cm, ganz besonders bevorzugt 5 bis 50 cm. Formteile aus erfindungsgemäß hergestellten Melaminharzschaumstoffe können bei kontinuierlicher, bevorzugt bei diskontinuierlicher Arbeitsweise erhalten werden.

Die Melaminharzschaumstoffe sowie die hydrophoben Melaminharzschäume in Form von Bahnen, Platten, Formteilen oder einer anderen Gestaltung können nach allgemein üblichen Methoden ein-, zwei-, mehr- oder allseitig mit Deckschichten versehen oder kaschiert werden, z.B. mit Papier, Pappe, Glasvlies, Holz, Gipspappe, Metallblechen oder Metallfolien, Kunststoff oder Kunststofffolien, die ggf. auch geschäumt sein können. Die Deckschichten können beim Aufschäumen oder anschließend aufgebracht werden. Beim nachträglichen Aufbringen ist es vorteilhaft einen "Haftvermittler" zu verwenden.

Die erfindungsgemäßen offenzelligen Melaminharzschäume finden Anwendung zur Schalldämpfung und Wärme- bzw. Kälteisolierung in Gebäuden, im Fahrzeug-, Eisenbahn- , Schiffs- und Flugzeugbau sowie in der Raumfahrt. Als Polstermaterial bei der Bepolsterung von Sitzflächen und als spezialisierter Reinigungsschwamm zur Entfernung hartnäckiger Verschmutzungen.

### Beispiele

### I. Mikroverkapselung

### Wasserphase

| | |
|---|---|
| 129, 54 g | Wasser |
| 97,14g | einer 5 gew.-%igen wässrigen Lösung von Methylhydroxypropylcellulose (Culminal® MHPC 100) |
| 24,28 g | einer 10 gew.-%igen wässrigen Polyvinylalkohollösung (Mowiol® 15-79) |
| 1,05 g | einer 2,5 gew.-%igen wässrigen Natriumnitritlösung |

### Ölphase

| | |
|---|---|
| 225g | eines Silikonöls (Belsil DM5) |
| 21.25 g | Methylmethacrylat |
| 3.75 g | Butandioldiacrylat |
| 0.36 g | tert.-Butylperpivalat |

### Zugabe 1

| | |
|---|---|
| 2,75 g | einer 10 gew.-%igen wässrigen Lösung von tert-Butylhydroperoxid |

### Zulauf 1

| | |
|---|---|
| 20,15 g | einer 1,1 gew.-%igen wässrigen Lösung von Ascorbinsäure |

Bei 40°C wurde die obige Wasserphase vorgelegt. Nach Zugabe der Ölphase wurde mit einem schnelllaufenden Dissolverrührer bei 2500 Upm für 40 Minuten dispergiert. Es wurde eine stabile Emulsion erhalten. Diese Emulsion wurde unter Rühren mit einem Ankerrührer über einen Zeitraum von 60 Minuten auf 70°C erwärmt, innerhalb von weiteren 60 Minuten auf eine Temperatur von 85°C erwärmt und bei dieser Temperatur eine Stunde gehalten. Es wurde Zugabe 1 zugegeben und die entstandene Mikrokapseldispersion unter Rühren innerhalb von 30 Minuten auf 20°C gekühlt, während Zulauf 1 zudosiert wurde. Anschließend wurde die Mikrokapseldispersion mit 1,75 g einer 25 gew.-%igen, wässrigen Natronlaugelösung neutralisiert.

Es wurde eine Mikrokapseldispersion mit einem Feststoffgehalt von 49% und einer mittleren Teilchengröße von D[4,3] = 6,3 µm (Malvern, Fraunhoferbeugung) erhalten.

### II. Darstellung von erfindungsgemäßen modifizierten Schaumstoffen

### II.1 Darstellung eines unmodifizierten Schaumstoffs

75 Gew.-Teile eines sprühgetrockneten Melamin-/Formaldehyd-Vorkondensates (Molverhältnis 1:3) wurden in 25 Gew.-Teilen Wasser gelöst. Dieser Harzlösung wurden 3 Gew.-% Ameisensäure, 2 Gew.-% eines Na-C₁₂/C₁₄-Alkylsulfats, 20 Gew.-% Pentan, jeweils bezogen auf das Harz, zugesetzt. Anschließend wurde gerührt und dann in einer Form (zum Schäumen) aus Polypropylen durch Einstrahlung von Mikrowellenenergie verschäumt. Nach dem Verschäumen wurde 30 Minuten getrocknet.

### II. 2. Darstellung von erfindungsgemäßen modifizierten Schaumstoffen

### Mikrokapseln mit Wacker Belsil® DM5

75 Gew.-Teile eines sprühgetrockneten Melamin-/Formaldehyd-Vorkondensates (Molverhältnis 1:3) wurden in 25 Gew.-Teilen Wasser gelöst. Dieser Harzlösung wurden 3 Gew.-% Ameisensäure, 2 Gew.-% eines Na-C₁₂/C₁₄-Alkylsulfats, 20 Gew.-% Pentan und 15 Gew.% einer wässrigen Dispersion von Mikrokapseln, jeweils bezogen auf das Harz, zugesetzt. Die Mikrokapseln weisen im Kern ein flüchtiges Silikonöl der Fa. Wacker auf (Belsil® DM5). Der Feststoffanteil beträgt 42 Gew.-%, der Silikongehalt 37 Gew.-% und die mittlere Teilchengröße 15 µm. Anschließend wurde gerührt und dann in einer Form (zum Schäumen) aus Polypropylen durch Einstrahlung von Mikrowellenenergie verschäumt. Nach dem Verschäumen wurde für 30 Minuten getrocknet

### III. Untersuchungen zur Wasseraufnahme

Nicht modifizierter Melaminharzschaum saugt sich bei Kontakt mit Wasser voll und geht innerhalb von Sekunden unter. Dagegen schwimmen die mit Silikonölen modifizierten Schaumstoffe für mehrere Stunden auf dem Wasser.

Des Weiteren dringen Wassertropfen, die mit einer Pipette auf die Oberfläche des Schaumstoffs gebracht wurden, nicht in den modifizierten Schaumstoff ein, während ein nicht-modifizierter Melaminharzschaum sofort mit dem Wassertropfen benetzt wird.

## Patentansprüche

1. Offenzellige Melamin-/Formaldehyd-Schaumstoffe mit in die Struktur des Schaumstoffs eingebauten Mikrokapseln.

2. Melaminharz-Schaumstoff nach Anspruch 1, wobei der Schaum 0,01 bis 50 Gew.-% Mikrokapseln enthält.

3. Melamin-/Formaldehyd-Schaumstoffe nach Anspruch 1, **dadurch gekennzeichnet, dass** die Mikrokapseln in der Schaumstruktur, bevorzugt in den Knotenpunkten, eingebettet sind.

4. Verfahren zur Herstellung von Melamin-/Formaldehyd-Schaumstoffen mit in die Struktur der Schaumstoffe eingebauten Mikrokapseln nach Anspruch 1 oder 2, **dadurch gekennzeichnet, dass** man einer oder mehreren der Komponenten aus der Gruppe der Melamin-/Formaldehyd-Vorkondensate oder den einzelnen Komponenten oder der Mischung aus Melamin und Formaldeyd die Mikrokapseln beifügt, diese Mischung mit einem Treibmittel und gegebenenfalls einem Lösungsmittel und gegebenenfalls einem oder mehreren Dispergiermitteln bzw. Emulgatoren und/oder Zusatzkomponenten vermischt und mittels Heissluft oder Mikrowellenenergie auf eine Temperatur oberhalb der Siedetemperatur des Treibmittels erwärmt.

5. Verwendung der Melamin-/Formaldehyd-Schaumstoffe mit in die Struktur der Schaumstoffe eingebauten Mikrokapseln nach einem der Ansprüche 1 bis 3 als Polsterung, zum Wärme-, Kälte- und Schallschutz und für Reinigungsschwämme.

## Claims

1. An open-cell melamine-formaldehyde foam comprising microcapsules built into the structure of said foam.

2. The melamine resin foam according to claim 1, wherein the foam comprises from 0.01% to 50% by weight of microcapsules.

3. The melamine-formaldehyde foam according to claim 1, wherein the microcapsules are embedded in the foam structure, preferably at the nodal points.

4. A process for producing a melamine-formaldehyde foam comprising microcapsules built into the structure of said foam according to claim 1 or 2, which process comprises one or more components from the group consisting of melamine-formaldehyde precondensates or the individual components or the mixture of melamine and formaldehyde having said microcapsules added to them and this mixture being mixed with a blowing agent and optionally a solvent and optionally one or more dispersants/emulsifiers and/or additional components and being heated by means of hot air or microwave energy to a temperature above the boiling temperature of said blowing agent.

5. The use of the melamine-formaldehyde foam comprising microcapsules built into the structure of said foam according to any one of claims 1 to 3 as cushioning, to provide heat, cold and acoustical protection and for cleaning sponges.

## Revendications

1. Mousses de mélamine/formaldéhyde à cellules ouvertes présentant des microcapsules incorporées dans la structure de la mousse.

2. Mousse de résine de mélamine selon la revendication 1, la mousse contenant 0,01 à 50 % en poids de microcapsules.

3. Mousses de mélamine/formaldéhyde selon la revendication 1, **caractérisées en ce que** les microcapsules sont enrobées dans la structure de la mousse, de préférence dans les points de noeud.

4. Procédé pour la préparation de mousses de mélamine/formaldéhyde présentant des microcapsules incorporées dans la structure des mousses selon la revendication 1 ou 2, **caractérisé en ce qu'**on ajoute les microcapsules à un ou plusieurs des composants du groupe formé par les produits de précondensation de mélamine/formaldéhyde ou les différents composants ou le mélange de mélamine et de formaldéhyde, on ajoute, à ce mélange, un agent gonflant et le cas échéant un solvant et le cas échéant un ou plusieurs dispersants ou émulsifiants et/ou composants supplémentaires et on chauffe au moyen d'air chaud ou d'énergie de microondes à une température supérieure à la température d'ébullition de l'agent gonflant.

5. Utilisation des mousses de mélamine/formaldéhyde présentant des microcapsules incorporées dans la structure de la mousse selon l'une quelconque des revendications 1 à 3 comme rembourrage, pour la protection contre la chaleur, le froid et le bruit et pour des éponges de nettoyage.
